# EUROPEAN PATENT SPECIFICATION

(11) **EP 2 218 285 B1**
(45) Date of publication and mention of the grant of the patent: **27.09.2017**
(21) Application number: 08849141.0
(22) Date of filing: 13.11.2008
(51) Int. Cl.: H04W 48/16

(54) **UTILIZING RESTRICTION CODES IN WIRELESS ACCESS POINT CONNECTION ATTEMPTS**
VERWENDUNG VON RESTRIKTIONSCODES FÜR VERBINDUNGSVERSUCHE BEI EINEM DRAHTLOSZUGANGSPUNKT
EMPLOI DE CODES DE RESTRICTION POUR DES TENTATIVES DE CONNEXION À UN POINT D'ACCÈS SANS FIL

(30) Priority: 16.11.2007 US 988631 P; 16.11.2007 US 988641 P; 16.11.2007 US 988649 P; 12.11.2008 US 269611
(43) Date of publication of application: 18.08.2010
(73) Proprietor: QUALCOMM Incorporated, San Diego, CA 92121 (US)
(72) Inventor: HORN, Gavin B., San Diego California 92121 (US); ULUPINAR, Fatih, San Diego California 92121 (US); AGASHE, Parag A., San Diego California 92121 (US); PRAKASH, Rajat, San Diego California 92121 (US)
(74) Representative: Heselberger, Johannes
(86) International application number: PCT/US2008/083465
(87) International publication number: WO 2009/064930

(56) References cited:
- EP-A- 0 589 552
- EP-A- 1 717 993
- WO-A-2007/080490
- WO-A-2007/097673
- US-A1- 2003 051 132
- US-A1- 2004 009 779
- US-A1- 2006 040 700
- US-A1- 2008 081 636
- TELECOM ITALIA ET AL: "Pseudo-CR on Allowed CSG List update", 3GPP DRAFT; C1-083427, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Budapest, Hungary; 20080822, 22 August 2008 (2008-08-22), XP050308622, [retrieved on 2008-08-22]

## Description

### BACKGROUND

### I. Field

The following description relates generally to wireless communications, and more particularly to utilizing restriction codes in conjunction with attempts to connect to wireless access points.

### II. Background

Wireless communication systems are widely deployed to provide various types of communication content such as, for example, voice, data, and so on. Typical wireless communication systems may be multiple-access systems capable of supporting communication with multiple users by sharing available system resources (*e.g*., bandwidth, transmit power, ...). Examples of such multiple-access systems may include code division multiple access (CDMA) systems, time division multiple access (TDMA) systems, frequency division multiple access (FDMA) systems, orthogonal frequency division multiple access (OFDMA) systems, and the like. Additionally, the systems can conform to specifications such as third generation partnership project (3GPP), 3GPP long term evolution (LTE), ultra mobile broadband (UMB), *etc.*

Generally, wireless multiple-access communication systems may simultaneously support communication for multiple mobile devices. Each mobile device may communicate with one or more base stations *via* transmissions on forward and reverse links. The forward link (or downlink) refers to the communication link from base stations to mobile devices, and the reverse link (or uplink) refers to the communication link from mobile devices to base stations. Further, communications between mobile devices and base stations may be established *via* single-input single-output (SISO) systems, multiple-input single-output (MISO) systems, multiple-input multiple-output (MIMO) systems, and so forth. In addition, mobile devices can communicate with other mobile devices (and/or base stations with other base stations) in peer-to-peer wireless network configurations.

MIMO systems commonly employ multiple (*N_{T}*) transmit antennas and multiple (*N_{R}*) receive antennas for data transmission. The antennas can relate to both base stations and mobile devices, in one example, allowing bi-directional communication between the devices on the wireless network. As mobile devices move throughout service areas, cells utilized for communication by the devices can be reselected between one or more access points *(e.g.,* macrocells, femtocells, *etc.).* This can occur, for example, where an available access point, or serving cell thereof, can offer a better signal or service than a current access point. The mobile devices can measure parameters related to one or more cells, such as signal quality, service level, *etc.* and rank the cells according to desirability, which can be based on one or more of the parameters. In one example, the available access point can relate to a home access point for a given mobile device offering desirable billing, coverage, service options, *etc.* Accordingly, cells utilized for communication can be reselected to the more desirable access point when within a specified range.

According to WO 2007/097673, all restricted local access points are provided in a part of the network that has a different network identity N₂, here a PLMN identity, than the identity of the rest of the network that has a network identity N1, also a PLMN identity. As a station belongs to a certain network having a certain network identity N2 it always tries to connect to that network. In the case of GSM this means that a SIM- (Subscriber Identity Module) card for the station may have a setting for the network identity N2 as a home network and a setting for the network identity N1 as a preferred visitor network. A first traffic control unit of the network keeps track of the user mobile stations allowed in the part of the network having the second network identity N2. If a mobile station is not allowed to roam into an area covered by a first restricted local access point, the access point responds with a cause code "Roaming not allowed in this LA".

US 2003/0051132 A1 relates to access points (AP) monitoring a security state of radio communication packets. An AP can send ESSID information identifying a group of a plurality of AP. Using this ESSID, a mobile station may connect to an AP in order to exchange data.

EP 1717 993 A1 relates to a monitor method for managing a terminal in a wireless network. It discloses the use of group identifiers, which may be compared between terminals an AP and deleted under certain conditions.

EP 0 589 5520 A2 relates to maintaining connectivity of nodes in a WLAN. It relates to the handoff from one AP to another AP, wherein information is communicated between them. The node then may adjust its own parameters to establish a connection with the other AP.

WO 2007/080490 A1 relates to secure identification of roaming rights prior authentication or association. The mechanism may include a Roaming ID or other methods to enhance security thereby reducing the risk of DoS attacks.

According to 3GPP C1-083427, when a UE finds a HeNB cell related to a CSG Id which is in the Allowed CSG List, it will attempt to access and triggers a Tracking Area Update procedure only if the HeNB cell belongs to a TAI not contained in a TAI List. If the UE receives a Tracking Area Update Accept procedure, it will access the CSG cell otherwise it removes the CSG id of the related HeNB cell from the Allowed CSG list. If the Owner of the HeNB decides to remove the UE's user from the CSG guest list, then the UE will be rejected by the network at the subsequent Service Request sent by the UE. When the UE receives a Service Reject message under a specific HeNB then it will delete the related CSG id from the Allowed CSG List.

### SUMMARY

Improvements over the prior art are provided by the subject matter of the independent claims. Advantageous embodiments are contained in the dependent claims.

The following presents a simplified summary of one or more embodiments in-order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later.

In accordance with one or more embodiments and corresponding disclosure thereof, various aspects are described in connection with facilitating utilizing restriction codes in wireless access point connection attempts. The codes can be used in reselecting a cell during cell reselection, for example, where reselection is attempted with a cell implementing restricted association. Thus, if a device requesting reselection to the cell is restricted from utilizing the cell, or access point related thereto, a restriction code can be received by the device indicating a reason for the restriction. In some cases, the restriction can be temporary (*e.g*., cell overloaded or resetting) or more permanent (*e.g*., device not authorized for access or cell is down for a period of time). Depending on the restriction, the device can remove the cell or related access point from a maintained list of cells for reselection where the list is consulted to verify whether possible cells, or related access points, for reselection are in the list. According to the present invention if the restriction code indicates a more permanent restriction, removing the cell or access point (or a group identifier related to the access point) from the maintained list can result in more efficient reselection. It is to be appreciated that the list can alternatively list cells to which reselection should not be attempted; based on the restriction code in this example, cells can be added to the list.

To the accomplishment of the foregoing and related ends, the one or more embodiments comprise the features hereinafter fully described and particularly pointed out in the claims. The following description and the annexed drawings set forth in detail certain illustrative aspects of the one or more embodiments. These aspects are indicative, however, of but a few of the various ways in which the principles of various embodiments may be employed and the described embodiments are intended to include all such aspects and their equivalents.

### BRIEF DESCRIPTION OF THE DRAWINGS

FIG. 1 is an illustration of a wireless communication system in accordance with various aspects set forth herein.
FIG. 2 is an illustration of a wireless communication network that facilitates cell reselection.
FIG. 3 is an illustration of an example communications apparatus for employment within a wireless communications environment.
FIG. 4 is an illustration of an example wireless communications system that effectuates utilizing restriction codes in connection establishment rejections.
FIG. 5 is an illustration of an example methodology that facilitates performing cell reselection in wireless networks.
FIG. 6 is an illustration of an example methodology that facilitates requesting connection establishment based on a maintained list of accessible access points.
FIG. 7 is an illustration of an example methodology that facilitates maintaining a list of accessible access points based on received restriction codes.
FIG. 8 is an illustration of an example mobile device that facilitates maintaining and utilizing a list of accessible access points in cell reselection.
FIG. 9 is an illustration of an example system that generates restriction codes for utilization in rejection connection requests.
FIG. 10 is an illustration of an example wireless network environment that can be employed in conjunction with the various systems and methods described herein.
FIG. 11 is an illustration of an example system that maintains and consults a list of accessible access point in requesting connection establishment.

### DETAILED DESCRIPTION

Various embodiments are now described with reference to the drawings, wherein like reference numerals are used to refer to like elements throughout. In the following description, for purposes of explanation, numerous specific details are set forth in-order to provide a thorough understanding of one or more embodiments. It may be evident, however, that such embodiment(s) can be practiced without these specific details. In other instances, well-known structures and devices are shown in block diagram form in-order to facilitate describing one or more embodiments.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets *(e.g.,* data from one component interacting with another component in a local system, distributed system, and/or across a network such as the Internet with other systems by way of the signal).

Furthermore, various embodiments are described herein in connection with a mobile device. A mobile device can also be called a system, subscriber unit, subscriber station, mobile station, mobile, remote station, remote terminal, access terminal, user terminal, terminal, wireless communication device, user agent, user device, or user equipment (UE). A mobile device can be a cellular telephone, a cordless telephone, a Session Initiation Protocol (SIP) phone, a wireless local loop (WLL) station, a personal digital assistant (PDA), a handheld device having wireless connection capability, computing device, or other processing device connected to a wireless modem. Moreover, various embodiments are described herein in connection with a base station. A base station can be utilized for communicating with mobile device(s) and can also be referred to as an access point, Node B, , evolved Node B (eNode B or eNB), base transceiver station (BTS) or some other terminology.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (*e.g*., hard disk, floppy disk, magnetic strips, *etc*.), optical disks (*e.g.,* compact disk (CD), digital versatile disk (DVD), *etc*.), smart cards, and flash memory devices (*e.g.,* EPROM, card, stick, key drive, *etc*.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

The techniques described herein may be used for various wireless communication systems such as code division multiple access (CDMA), time division multiple access (TDMA), frequency division multiple access (FDMA), orthogonal frequency division multiple access (OFDMA), single carrier frequency domain multiplexing (SC-FDMA) and other systems. The terms "system" and "network" are often used interchangeably. A CDMA system may implement a radio technology such as Universal Terrestrial Radio Access (UTRA), CDMA2000, *etc.* UTRA includes Wideband-CDMA (W-CDMA) and other variants of CDMA. CDMA2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM, *etc.* UTRA and E-UTRA are part of Universal Mobile Telecommunication System (UMTS). 3GPP Long Term Evolution (LTE) is an upcoming release that uses E-UTRA, which employs OFDMA on the downlink and SC-FDMA on the uplink. UTRA, E-UTRA, UMTS, LTE and GSM are described in documents from an organization named "3rd Generation Partnership Project" (3GPP). CDMA2000 and UMB are described in documents from an organization named "3rd Generation Partnership Project 2" (3GPP2).

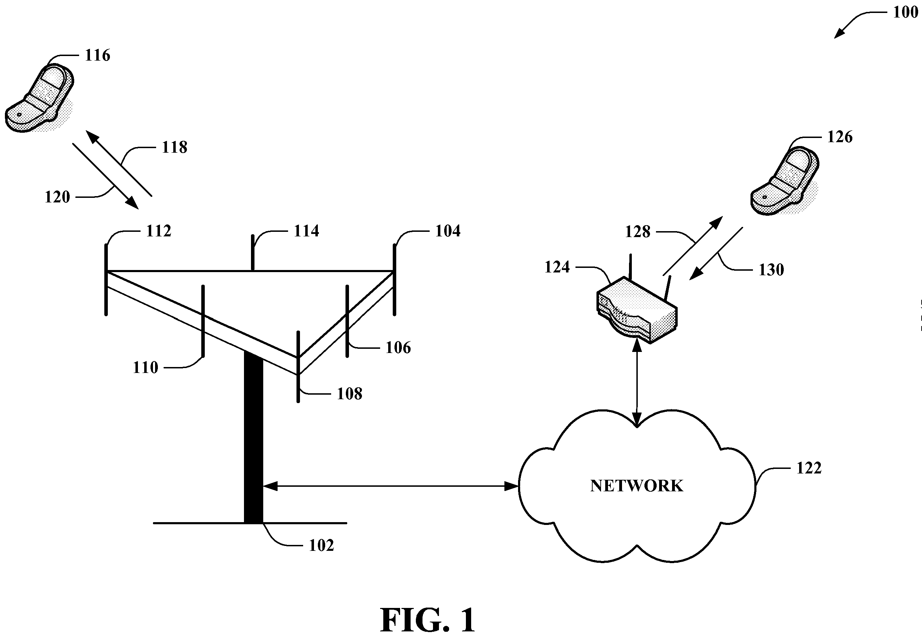

Referring now to **Fig. 1****,** a wireless communication system 100 is illustrated in accordance with various embodiments presented herein. System 100 comprises a base station 102 that can include multiple antenna groups. For example, one antenna group can include antennas 104 and 106, another group can comprise antennas 108 and 110, and an additional group can include antennas 112 and 114. Two antennas are illustrated for each antenna group; however, more or fewer antennas can be utilized for each group. Base station 102 can additionally include a transmitter chain and a receiver chain, each of which can in turn comprise a plurality of components associated with signal transmission and reception (*e.g*., processors, modulators, multiplexers, demodulators, demultiplexers, antennas, *etc.),* as will be appreciated by one skilled in the art.

Base station 102 can communicate with one or more mobile devices such as mobile device 116 and mobile device 126; however, it is to be appreciated that base station 102 can communicate with substantially any number of mobile devices similar to mobile devices 116 and 126. Mobile devices 116 and 126 can be, for example, cellular phones, smart phones, laptops, handheld communication devices, handheld computing devices, satellite radios, global positioning systems, PDAs, and/or any other suitable device for communicating over wireless communication system 100. As depicted, mobile device 116 is in communication with antennas 112 and 114, where antennas 112 and 114 transmit information to mobile device 116 over a forward link 118 and receive information from mobile device 116 over a reverse link 120. In a frequency division duplex (FDD) system, forward link 118 can utilize a different frequency band than that used by reverse link 120, for example. Further, in a time division duplex (TDD) system, forward link 118 and reverse link 120 can utilize a common frequency.

Each group of antennas and/or the area in which they are designated to communicate can be referred to as a sector or cell of base station 102. For example, antenna groups can be designed to communicate to mobile devices in a sector of the areas covered by base station 102. In communication over forward link 118, the transmitting antennas of base station 102 can utilize beamforming to improve signal-to-noise ratio of forward link 118 for mobile device 116. Also, while base station 102 utilizes beamforming to transmit to mobile device 116 scattered randomly through an associated coverage, mobile devices in neighboring cells can be subject to less interference as compared to a base station transmitting through a single antenna to all its mobile devices. Moreover, mobile devices 116 and 126 can communicate directly with one another using a peer-to-peer or ad hoc technology.

In addition, the base station 102 can communicate with a network 122, which can be one or more networks including a wireless service access network (e.g., a 3G network), over a backhaul link connection. The network 122 can store information regarding access parameters related to the mobile device 116 and 126 and other parameters of a wireless access network to provide service to the devices 116 an 126. Furthermore, a femtocell 124 can be provided to facilitate communicating with the mobile device 126 over forward link 128 and reverse link 130 (similarly to forward link 118 and reverse link 120, as described *supra*)*.* The femtocell 124 can provide access to one or more mobile devices 126 much like the base station 102, but on a smaller scale. In one example, femtocell 124 can be configured in a residence, business, and/or other close range setting *(e.g.,* theme park, stadium, apartment complex, *etc.).* The femtocell 124 can connect to the network 122 utilizing a backhaul link connection, which can be over a broadband Internet connection (T1/T3, digital subscriber line (DSL), cable, *etc.),* in one example. The network 122 can similarly provide access information for the mobile device 126.

According to an example, mobile devices 116 and 126 can travel over service areas performing cell reselection among disparate base stations and/or femtocells during travel. In this regard, the mobile devices 116 and 126 can effectuate continuous wireless service seamless to users of the mobile devices 116 and 126. In one example (not shown), mobile device 126 can have been communicating with the base station 102 similarly to the mobile device 116, and can have moved into a specified range of the femtocell 124. In this regard, the mobile device 126 can have reselected one or more cells related to the femtocell 124 to receive more desirable wireless service access. In one example, the femtocell 124 can be a home access point for the mobile device 126 offering more desirable billing and/or other access options. In another example, the femtocell 124 can be related to a business or venue offering options or data tailored to the respective business or venue. Thus, mobile device 126 can reselect one or more cells related to the femtocell 124 to receive such tailored options. In addition, as mobile device 126 moves toward base station 102, it can reselect a cell related thereto, for a variety of reasons *(e.g.,* to mitigate interference on the femtocell 124, to receive a more optimal signal or increased throughput, *etc.).*

In traveling over the service area, mobile devices 116 and/or 126 can continually measure available base stations (such as base station 102), femtocells (such as femtocell 124), and/or other access points, to determine when cell reselection is beneficial to the mobile devices 116 and/or 126. The measuring can include, for example, evaluating signal quality, throughput, services available, a wireless access provider related to the access point, and/or the like. Based on one or more of the measurements, the mobile devices 116 and/or 126 can rank access points for reselection. Upon determining the ranking, the mobile devices 116 and/or 126 can attempt cell reselection to the highest ranking access point. In addition, the mobile devices 116 and/or 126 can maintain a list of accessible access points and/or groups of accessible access points. The accessible access points can relate to, for example, restricted association access points that the mobile devices 116 and/or 126 are authorized to access and/or to which access is preferred or otherwise favorable over other access points.

In one example, the femtocell 124 can be such a restricted association access point. Restricted association access points, for example, can be restricted in some aspects where each access point provides certain services to certain mobile devices (*e.g.*, mobile devices 116 and/or 126) but not necessarily to other mobile devices or access terminals (not shown). For example, the femtocell 124 can be restricted to not provide to the other mobile devices or access terminals registration, signaling, voice call, data access, and/or additional services. Restricted association access points can be deployed in an ad-hoc manner. For example, a given homeowner can install and configure a restricted access point for the home.

In one example, the mobile devices 116 and/or 126 can identify one or more available access points based at least in part on one or more indicators in a broadcast signal related to the access point(s). Upon receiving the one or more indicators, the mobile devices 116 and/or 126 can ensure the access point(s) is/are in the list, or that a related group identifier is in the list, before attempting cell reselection. In another example, the mobile devices 116 and/or 126 can verify association of the access point with the list before measuring the parameters for ranking.

In this regard, restriction codes can be utilized by available access points, such as base station 102 and/or femtocell 124, to indicate whether it supports connection with the mobile device 116 and/or 126 or whether connection is unsuitable. The mobile device 116 and/or 126, upon receiving one or more restriction codes, can remove the access point, such as base station 102 and/or femtocell 124, and/or a group identifier related thereto from the list of accessible access points. Thus, in subsequent cell reselection, the mobile device 116 and/or 126 can disregard cells related to the restricted access point or an identified related group, which conserves resources and time required to attempt connection with the access point or other access points in the same group. As described, the mobile device 116 and/or 126 can receive some restriction codes for which it does not remove the access point or group from the list *(e.g.,* where the access point is currently at a maximum connection capacity). In another example, the mobile device 116 and/or 126 can maintain a list of inaccessible access points or groups and can add the access point or group identifiers to the list based at least in part on the received restriction code.

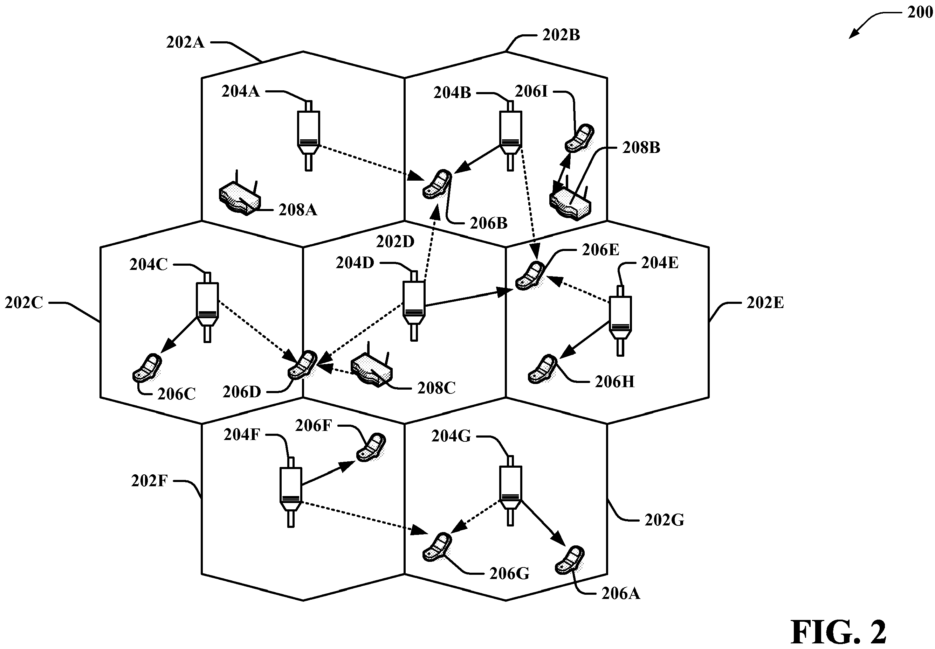

Now referring to **Fig. 2****,** a wireless communication system 200 configured to support a number of mobile devices is illustrated. The system 200 provides communication for multiple cells, such as for example, macrocells 202A - 202G, with each cell being serviced by a corresponding access point 204A - 204G. As described previously, for instance, the access points 204A - 204G related to the macrocells 202A - 202G can be base stations. Mobile devices 206A - 206I are shown dispersed at various locations throughout the wireless communication system 200. Each mobile device 206A - 206I can communicate with one or more access points 204A-204G on a forward link and/or a reverse link, as described. In addition, access points 208A - 208C are shown. These can be smaller scale access points, such as femtocells, offering services related to a particular service location, as described. The mobile devices 206A - 206I can additionally communicate with these smaller scale access points 208A - 208C to receive offered services. The wireless communication system 200 can provide service over a large geographic region, in one example (e.g., macrocells 202A - 202G can cover a few blocks in a neighborhood, and the femtocell access points 208A - 208C can be present in areas such as residences, office buildings, and/or the like as described). In an example, the mobile devices 206A - 206I can establish connection with the access points 204A - 204G and/or 208A - 208C over the air and/or over a backhaul connection.

Additionally, as shown, the mobile devices 206A - 206I can travel throughout the system 200 and can reselect cells related to the various access points 204A - 204G and/or 208A - 208C as it moves through the different macrocells 202A-202G or femtocell coverage areas. In one example, the one or more of the mobile devices 206A - 206I can be associated with a home femtocell related to at least one of femtocell access points 208A - 208C. For example, mobile device 206I can be associated with femtocell access point 208B as its home femtocell. Thus, though mobile device 206I is in macrocell 202B, and thus in coverage area of access point 204B, it can communicate with the femtocell access point 208B instead of (or in addition to) access point 204B. In one example, the femtocell access point 208B can provide additional services to the mobile device 206I, such as desirable billing or charges, minute usage, enhanced services (*e.g*., faster broadband access, media services, *etc.).* Thus, when the mobile device 206I is in range of the femtocell access point 208B, it can be reined in to communicate therewith by favoring the femtocell access point 208B in reselection.

For example, mobile device 206D can be associated with femtocell access point 208C. As the mobile device 206D moves from macrocell 202C into 202D and closer to access points 204D and/or 208C, it can begin the cell reselection process, as described herein. This can include, for example, measuring surrounding cell parameters (e.g., related to access points 204C, 204D, and 208C) to determine a desirable connection. The parameters can relate to, for example, signal quality, connection throughput, services offered, a service provider related to the access point, and/or the like. The mobile device 206D can additionally verify an identifier of the access point as present in a list of accessible access points, as described. The list can additionally or alternatively identify groups of access points where a group identifier of the access point can be verified with group identifiers in the list. In the foregoing example, the mobile device 206D can measure parameters for access points 204C, 204D, and 208C and rank the cells to determine whether to perform cell reselection from access point 204C to one of the others if their rank is higher. As in the previous example, where femtocell access point 208C relates to a home femtocell of the mobile device 206D, it can favor it for reselection (*e.g*., by evaluating an added parameter offset to increase its value and/or hysteresis to decrease parameter values of other access points, for example). If one or more of the disparate access points 204D and/or 208C rank higher than the access point 204C, mobile device 206D can reselect one or more cells related to the disparate access point 204D or 208C.

In one example, one or more of the disparate access points 204D and/or 208C can implement restricted association where some mobile devices cannot connect thereto, and/or the access points 204D and/or 208C can restrict certain mobile devices with respect to providing signaling, data access, registration, service, and/or the like. This can be based at least in part on a service provider of the mobile device and the restricted associated access point, for example. In another example, the restricted association access point can relate to certain mobile devices, such as a corporate access point restricting access only to corporate issued mobile devices. Thus, if the mobile device 206D cannot reselect cells related to one or more of the disparate access points 204D and/or 208C due to restricted association, it can attempt cell reselection with one or more of the other ranked access points until it finds an access point to which it can connect. Where the mobile device 206D cannot connect to access point 204D and/or 208C due to restricted association, it can receive a restriction code indicating the reason for the restriction.

Furthermore, as described, the mobile devices 206A - 206I can maintain a list of accessible access points and/or groups thereof. In one example, the list can include only certain types of access points (such as femtocells) since other types of access points (such as macrocells) can be accessible from substantially any mobile device. The list of accessible access points and/or groups can be originally populated, for example, by one or more access points in communication with the mobile device 206A - 206I, which can retrieve the information from an underlying wireless network as described. As the mobile devices 206A - 206I move throughout the coverage area of the wireless system 200 and reselects cells as described, it can first verify the cells as being present in the list where relevant. In one example, if the mobile devices 206A - 206I determine one or more femtocell access points 208A - 208C to be the highest ranked cell based on measurements as described, it can verify that the respective femtocell access point is in the list. If not, the mobile devices 206A - 206I can decide not to attempt access to the femtocell access point and can attempt connection with the next highest ranked access point and/or attempt to locate another access point on a disparate frequency. As described, the ranking can be affected by an offset and/or hysteresis value to favor an access point respectively when in range or connected thereto. As described above, the mobile devices 206A - 206I can receive a restriction code, over the air or over an established backhaul connection, where connection to an access point is denied. Thus, if the mobile device 206A - 206I receives a restriction code when attempting to connect with an access point, and the access point or related group is identified in the list, it can remove the access point and/or group from the list based at least in part on the code to prevent future connection attempts to the access point or access points of the related group, as described. It is to be appreciated that a list of inaccessible cells and/or groups can be maintained where the mobile devices 206A - 206I can add the restricted association cell to the list.

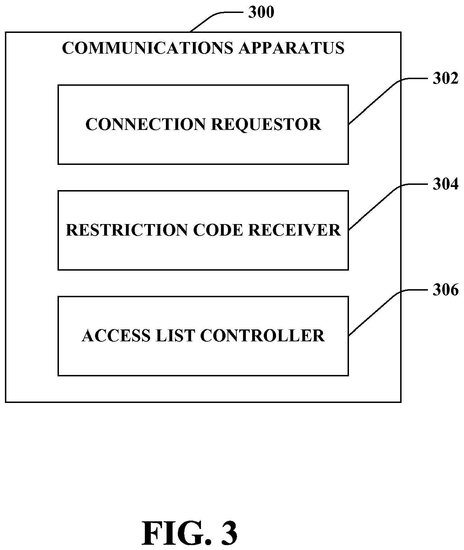

Turning to **Fig. 3****,** illustrated is a communications apparatus 300 for employment within a wireless communications environment. The communications apparatus 300 can be a base station or a portion thereof, a mobile device or a portion thereof, or substantially any communications apparatus that receives data transmitted in a wireless communications environment. The communications apparatus 300 can include a connection requestor 302 that transmits a request for connection establishment to one or more disparate communications apparatuses (not shown) to receive wireless communication services, a restriction code receiver 304 that can receive and evaluate a restriction code received in response to requesting the connection establishment, and an access list controller 306 that can maintain a list of access points or groups of access points with which communication can be established by the communications apparatus 300. In another example, the access list controller 306, as described, can maintain a list of forbidden access points or groups.

In one example, the communications apparatus 300 can attempt to establish a connection with one or more surrounding access points (not shown) over the air and/or over a backhaul connection. The access list controller 306 can identify the one or more access points or group identifiers related to the access point and verify presence of the access point and/or group identifier in a list of accessible access points or groups (or confirm absence in a list of forbidden access points/groups, in another example). Based at least on this verification, the connection requestor 302 can request connection establishment with the one or more access points by transmitting the request thereto. In one example, the communications apparatus 300 can receive a rejection in response to the connection establishment request. The rejection can relate to a variety of reasons, and thus, the restriction code receiver 304 can receive a restriction code in the rejection response to allow identification of the reason for rejection. The restriction code can be received over the air and/or over a backhaul connection utilized to attempt connection establishment. For example, the restriction can relate to the communications apparatus 300 being unauthorized to establish communication with the access point *(e.g.,* the access point is a restricted association access point), resource deficiency in the access point, a status of the access point, and/or the like.

In this example, the access list controller 306 can take certain action with respect to the access point and the maintained list of accessible access points and/or groups. For example, where the restriction code receiver 304 determines the code to be related to lack of authorization of the communications apparatus 300 to access the restricted association access point, the access list controller 306 can remove the access point from the maintained list of accessible access points (or add it to a list of forbidden access points). In this regard, the communications apparatus 300 can skip over the access point in a subsequent request for connection establishment as it is no longer in the list of accessible access points (or is present within the list of forbidden access points), which conserves resources of the communications apparatus. In another example, the access list controller 306 can remove a group identifier associated with the access point from the maintained list such to mitigate the connection requestor 302 attempting connection establishment with access points having the same group identifier (*e.g.,* where the access point group is related to a certain service provider inaccessible by the communications apparatus 300).

According to an example, the list maintained by the access list controller 306 can relate to only certain types of access points or groups thereof. For example, base stations can be absent from the list, as access to the base stations can be provided for substantially all devices and/or mechanisms for identifying appropriate base stations can be already present in the communications apparatus 300. In this example, the access list controller 306 can maintain a list of femtocells, or related group identifiers thereof, that it can access for wireless communication services. The list can be of known restricted association access points, for example. The access list controller 306 can be consulted by the connection requestor 302 for verification of presence of an access point in the list before requesting connection. In another example, the access list controller 306 can be consulted by one or more disparate components of the communications apparatus 300 when measuring cell parameters to identify access points or cells that need not be measured (*e.g*., because they are not in the list of accessible access points). Thus, the communications apparatus 300 can conserve resources in this regard as well. In either case, maintaining the list of accessible access points and updating the list upon receiving restriction codes allows the communications apparatus 300 to avoid connecting with restricted femtocells, from which association is restricted, saving resources that would be utilized by attempting connection establishment.

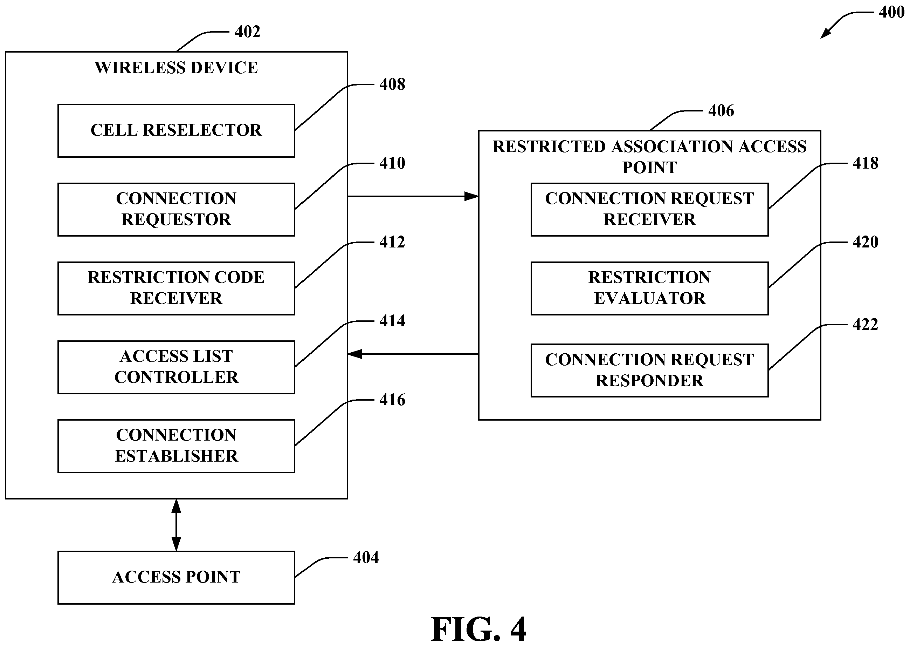

Now referring to **Fig. 4****,** illustrated is a wireless communications system 400 where restriction codes can be provided to identify restricted association access points. The wireless device 402, access point 404, and/or restricted association access point 406 can be a base station, femtocell, mobile device, or portion thereof. In one example, wireless device 402 can transmit information to an access point 404 and/or restricted association access point 406 over a reverse link or uplink channel; further wireless device 402 can receive information from access point 404 or restricted association access point 406 over a forward link or downlink channel. Moreover, system 400 can be a MIMO system. Also, the components and functionalities shown and described below in the wireless device 402 can be present in the access point 404 and/or restricted association access point 406 as well and *vice versa,* in one example; the configuration depicted excludes these components for ease of explanation.

Wireless device 402 includes a cell reselector 408 that can measure cell parameters, as described, and reselect a cell for receiving wireless communication services, a connection requestor 410 that can request connection establishment with an access point related to the reselected cell, a restriction code receiver 412 that can receive a restriction code related to the request for connection, an access list controller 414 that can maintain a list of accessible access points and/or related group identifiers and verify existence of the access point, or related group identifier, corresponding to the reselected cell in the list, and a connection establisher 416 that can establish the connection with the reselected access point. In one example, the wireless device 402 can be communicating with access point 404 to receive wireless communication services (*e.g*., over the air or over a backhaul connection) and can move in range of the restricted association access point 406. As described below, the wireless device 402 can initiate cell reselection to the restricted association access point 406.

The restricted association access point 406 comprises a connection request receiver 418 that receives a request for connection establishment from one or more wireless devices, a restriction evaluator 420 that can determine one or more restrictions related to the wireless devices accessing the restricted association access point 406, and a connection request responder 422 that can transmit a response to the connection request comprising a restriction code indicating the determined restriction related to accessing the restricted association access point 406. The restriction code can relate to the wireless device being unauthorized to access the restricted association access point 406, in one example. In another example, the restriction evaluator 420 can determine whether restrictions regarding providing signaling, data access, registration, and/or service apply to the wireless device 402. The restriction code can convey such restrictions allowing the wireless device 402 to utilize the information in performing subsequent actions, for example.

According to an example, as described, the wireless device 402 can participate in a wireless communications system traveling around the system and receiving wireless service access from one or more disparate access points, such as access point 404 and/or restricted association access point 406. The access points can provide broad area coverage, such as a base station implementing one or more macrocells, and/or more localized or specific coverage, such as a femtocell configured in a residence, office building, venue, *etc.,* as described. The wireless device 402 can perform cell reselection among the access points, as described, when coming into range of a new access point, such as restricted association access point 406 and out of range of a current access point 404. This can be determined by evaluating parameters relating to the access points 404 and 406 such that the determination can be based on multiple parameters (not just signal strength, for example). In this regard, the wireless device 402 supports seamless communications while traveling throughout the wireless network.

According to an example, the wireless device 402 can be communicating with access point 404 to receive wireless communication services. The wireless device 402, as described, can be mobile, and the cell reselector 408 can evaluate surrounding cells to determine when cell reselection is appropriate to continue the wireless communication services. This can occur, for example, where the wireless device 402 moves in range of an access point improving signal quality thereof while moving away from the connected access point 404 experiencing a degradation in its signal quality. In this regard, the cell reselector 408 can measure surrounding cell parameters and rank the cells according to the parameters. When the current access point 404 falls from the top of the ranked list, in one example, the wireless device 402 can begin cell reselection to the top ranked access point.

The cell reselector 408 can rank access points based not only on metrics such as signal quality, throughput, and/or the like, but also services provided by the access point, identification of the access point as a home access point (providing desirable billing, speeds, and/or the like), *etc.* In one example, a cell related to the restricted association access point 406 can outrank the current cell related to the access point 404. The access list controller 414 can be leveraged to determine if the restricted association access point 406, or an associated group identifier, is listed in a list of accessible access points and/or groups maintained by the access list controller 414. In one example, verifying the access point 406 in the list can be based on a type of access point; for example, a base station may not need to be verified as its access is not restricted whereas the restricted association access point 406 can be verified for presence in the list. If the restricted association access point 406 is not in the list, the wireless device 402 can evaluate the next access point in the ranked list for cell reselection; in one example, the next ranked access point can be the current access point 404 such that the wireless device 402 ceases cell reselection.

If, however, the restricted association access point 406, or related group identifier, is in the list maintained by the access list controller 414, the connection requestor 410 can request connection establishment with the restricted association access point 406. The connection request receiver 418 can receive the request for connection establishment and can determine whether to grant the request. The restriction evaluator 420 can determine whether restrictions exist related to communicating with the wireless device 402. Restrictions can be determined based at least in part on an access provider of the wireless device 402, one or more protocols supported by the wireless device 402, media access control (MAC) address or other wireless device 402 identifiers, and/or substantially any communication parameters related to the wireless device 402. In addition, restrictions can be determined based at least in part on explicit specification by the restricted association access point 406. For example, an operator of the access point 406 can identify one or more mobile devices that are to receive or to be denied access from/to the restricted association access point 406. If no restrictions exist, the connection request responder 422 can indicate successful connection establishment to the connection establisher 416 based on additional parameters *(e.g.,* sufficient resources, *etc.)* and the connection establishment can be completed.

If restrictions do exist and the restricted association access point 406 is unsuitable for connection establishment with the wireless device 402, however, the restriction evaluator 420 can determine a restriction code related to a reason for the restriction, as described. The connection request responder 422 can subsequently include the restriction code in response to the connection establishment request. The restriction code receiver 412 can determine the restriction code from the response, which can be received over the air and/or over a backhaul connection utilized to request connection establishment. For example, the restriction code receiver can determine the restriction related to providing signaling, data access, registration, and/or service to the wireless device 402. If the restriction code indicates that the wireless device 402 is unauthorized to establish connection with the restricted association access point 406, the access list controller 414 can remove the restricted association access point 406, and/or a related group identifier, from the list. Thus, the wireless device 402 can skip the restricted association access point 406, and/or similar access points associated with a related group, in subsequent cell reselection attempts conserving resources on the wireless device 402 by mitigating failed connection establishment attempts. It is to be appreciated that some restriction codes can result in not removing the access point 406 or group identifier from the list maintained by the access list controller. For example, if the restriction code indicates the restricted association access point 406 is temporarily lacking resources to handle the wireless device 402. In one example, though, receiving such codes can result in a timed removal of the access point from the list. For example, after a period of time, the access point can be re-added to the list by the access list controller 414 since denial of access was temporary. In one example, the list maintained by the access list controller 414 can be updated by a current access point and/or one or more components of a wireless communication system.

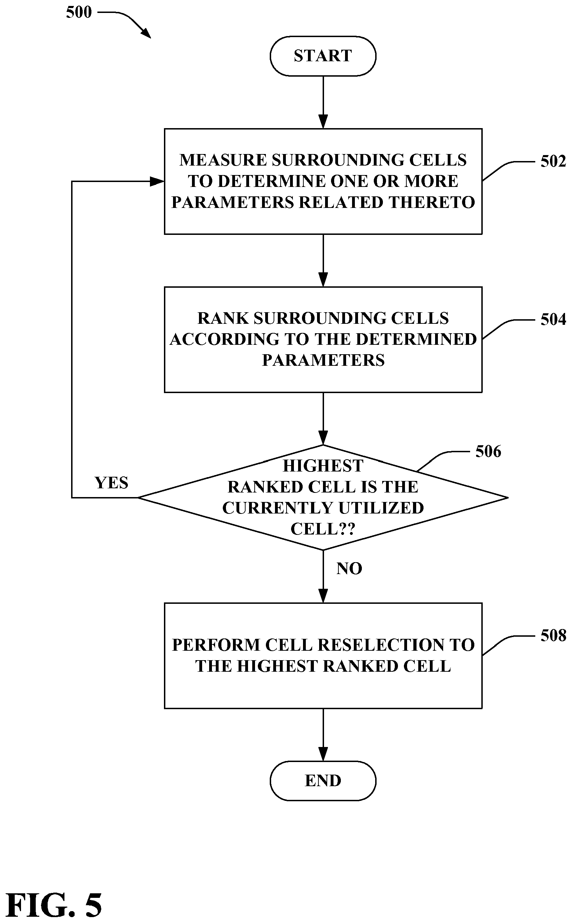

Referring to **Figs. 5-7****,** methodologies relating to cell reselection and utilizing restriction codes in rejecting connection establishment attempts are illustrated. While, for purposes of simplicity of explanation, the methodologies are shown and described as a series of acts, it is to be understood and appreciated that the methodologies are not limited by the order of acts, as some acts may, in accordance with one or more embodiments, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with one or more embodiments.

Turning to **Fig. 5****,** a methodology 500 that facilitates cell reselection in wireless communications is displayed. At 502, surrounding cells are measured to determine one or more parameters related thereto. As described, the parameters can relate to communication metrics, such as signal strength, throughput, *etc.* and/or one or more additional considerations, such as an access point identifier, a group identifier, services offered, a related access provider, *etc.* In addition, the parameters can relate to the cell being provided by a home access point, which provides enhanced billing aspects, additional service or speeds, and/or the like. The parameters can also relate to offsets or hysteresis to increase consideration of desirable access points (such as a home access point, for example) and/or decrease consideration of other access points. At 504, the surrounding cells can be ranked according to the determined parameters. The ranking can indicate an order of desirable cells from which to receive wireless communication services.

At 506, it can be determined whether the highest ranked cell is that currently utilized. Such a determination can be utilized to ensure connection with an optimal access point. If the highest ranked cell is the cell currently utilized to receive wireless communications, the method proceeds back to step 502 to again measure surrounding cells. This can be based on a timer, in one example, as to not flood the network with cell measurements or spend resources by constantly measuring the cells. If the highest ranked cell is not the currently utilized cell, at 508, cell reselection can be performed, as described herein, to reselect the highest ranked cell. It is to be appreciated, in one example, that once reselection is complete, the method, in one example, can proceed back to step 502 to continue measuring surrounding cells. As described, the access points can be base stations, femtocells, and/or the like.

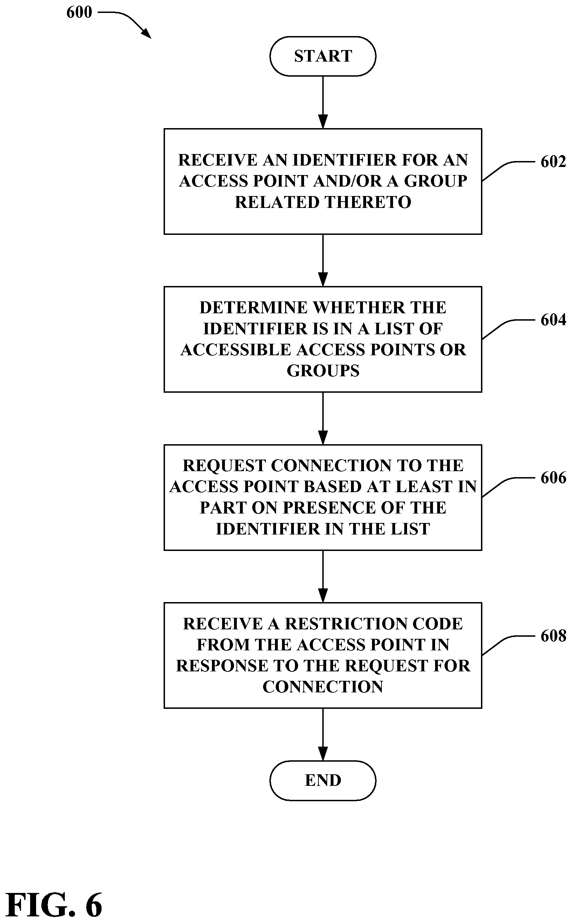

Turning to **Fig. 6****,** illustrated is a methodology 600 that attempts connection establishment with one or more access points in a wireless communications network. At 602, an identifier can be received for an access point and/or a group related thereto. The identifier(s) can be received, for example, during a cell measurement process in cell reselection, as described. Alternatively, the identifier(s) can be received by otherwise evaluating the access point. At 604, it can be determined whether the identifier is in a list of accessible access points or groups, as described. Thus, in one example, the access point can belong to a group, and the group can relate to common access providers and/or the like. By determining whether the access point or group is in the list, resources can be conserved by preventing cell reselection attempts to restricted association access points, and/or related groups of such access points, to which access is unauthorized.

At 606, a connection can be requested to the access point based at least in part on presence of the identifier(s) in the list. It is to be appreciated that, alternatively, a list of forbidden access points and/or groups can be maintained, as described, in which case access can be requested based on absence of the identifier(s) in the list. In addition, an access point can have an individual and group identifier. It is to be appreciated that one or the other, both, or neither of the identifiers can be in the list. At 608, a restriction code can be received from the access point in response to the request for connection. For example, the access point can deny a connection request specifying a restriction code to indicate a reason for the rejection. Subsequent action can be taken based at least in part on the restriction code value, for example.

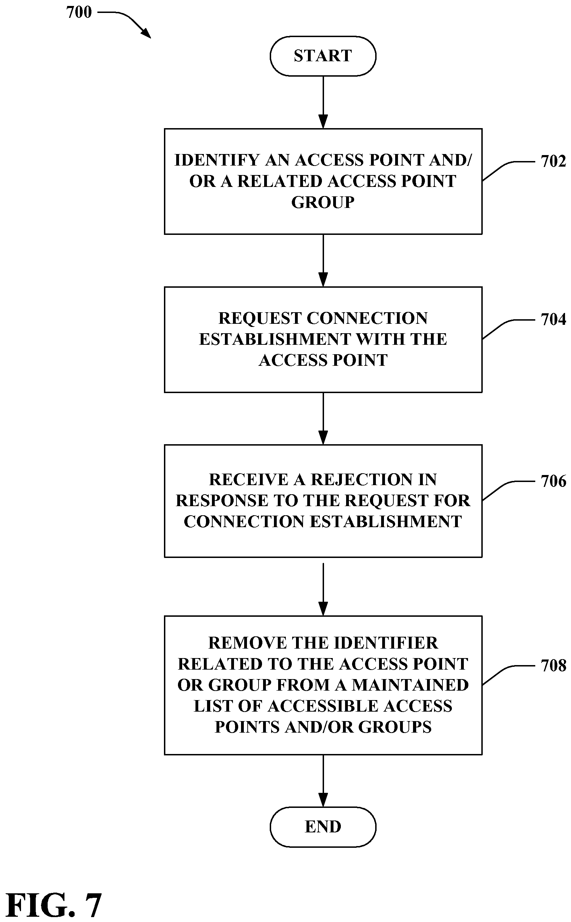

Turning to **Fig. 7****,** illustrated is a methodology 700 that attempts connection establishment with one or more access points in a wireless communications network. At 702, an access point and/or related access point group is identified. This can be based at least in part on a received or determined identifier, for example. At 704, connection establishment can be requested with the access point. This can be performed as part of a cell reselection process as described herein. At 706, a rejection can be received in response to the request for connection establishment. The rejection can comprise a restriction code, as described *supra.* At 708, the identifier related to the access point or group can be removed from a maintained list of accessible access points and/or groups. For example, connection establishment can have been initially requested based on presence of the identifier in the list. Thus, removing the identifier from the list can preclude further connection establishment requests with the access points or other access points having the same group identifier.

It will be appreciated that, in accordance with one or more aspects described herein, inferences can be made regarding many aspects of cell reselection, such as measuring the parameters, ranking the cells according to the parameters (and/or additional parameters), and even aspects of actual reselection (such as when to perform the reselection, *etc.)* as described. As used herein, the term to "infer" or "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources. In one example, inferences can additionally be made in determining parameters of cells during measurement based at least in part on receiving further information from one or more mobile devices.

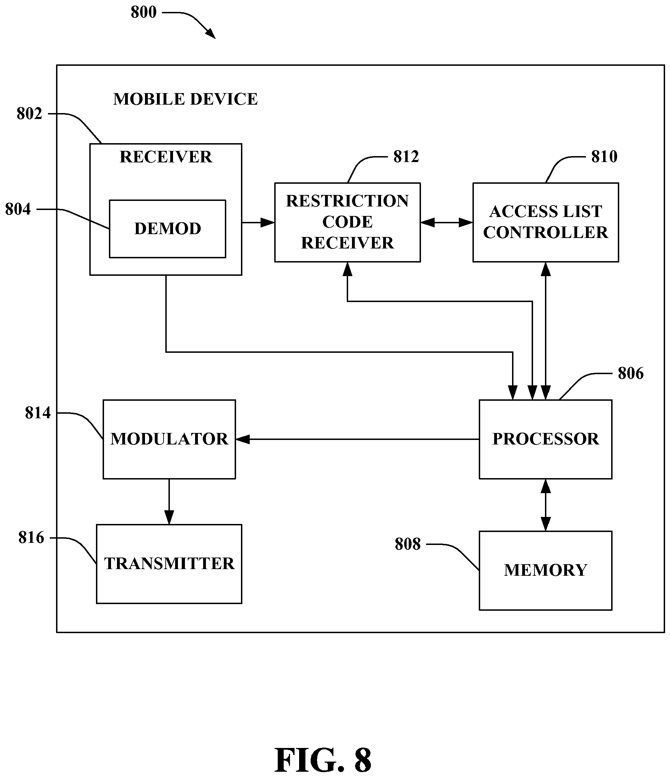

**Fig. 8** is an illustration of a mobile device 800 that facilitates utilizing restriction codes received in connection establishment attempts to determine access points for cell reselection. Mobile device 800 comprises a receiver 802 that receives a signal from, for instance, a receive antenna (not shown), performs typical actions on *(e.g.,* filters, amplifies, downconverts, *etc.)* the received signal, and digitizes the conditioned signal to obtain samples. Receiver 802 can comprise a demodulator 804 that can demodulate received symbols and provide them to a processor 806 for channel estimation. Processor 806 can be a processor dedicated to analyzing information received by receiver 802 and/or generating information for transmission by a transmitter 816, a processor that controls one or more components of mobile device 800, and/or a processor that both analyzes information received by receiver 802, generates information for transmission by transmitter 816, and controls one or more components of mobile device 800.

Mobile device 800 can additionally comprise memory 808 that is operatively coupled to processor 806 and that can store data to be transmitted, received data, information related to available channels, data associated with analyzed signal and/or interference strength, information related to an assigned channel, power, rate, or the like, and any other suitable information for estimating a channel and communicating *via* the channel. Memory 808 can additionally store protocols and/or algorithms associated with estimating and/or utilizing a channel (*e.g*., performance based, capacity based, *etc.).*

It will be appreciated that the data store (*e.g*., memory 808) described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable PROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). The memory 808 of the subject systems and methods is intended to comprise, without being limited to, these and any other suitable types of memory.

Processor 806 can further be operatively coupled to an access list controller 810 that can maintain a list of accessible access points. As described, the list can comprise identifiers for restricted association access points and/or groups related thereto. In this regard, access points that are not of a restricted association type need not be populated to the list, in one example. Additionally, the access list controller 810 can be consulted in requesting access to a restricted association access point. This can ensure that the mobile device 800 does not expend resources requesting connection establishment with access points for which association is restricted with respect to the mobile device 800. In addition, processor 806, and/or receiver 802, can further be operatively coupled to a restriction code receiver 812 that can obtain a restriction code in response to requesting connection establishment with one or more access points.

Based at least in part on the code, the access list controller 810 can remove the access point and/or a related group identifier, from its list. This can preclude the mobile device 800 from requesting connection establishment with the access point or those in the same group so long as the identifier is absent from the list. Removal from the list can be based at least in part on the restriction code. For example, there can be restriction codes that indicate a more temporary lack of authorization to establish connection with the access point. Mobile device 800 still further comprises a modulator 814 and transmitter 816 that respectively modulate and transmit signals to, for instance, a base station, another mobile device, *etc.* Although depicted as being separate from the processor 806, it is to be appreciated that the access list controller 810, restriction code receiver 812, demodulator 804, and/or modulator 814 can be part of the processor 806 or multiple processors (not shown).

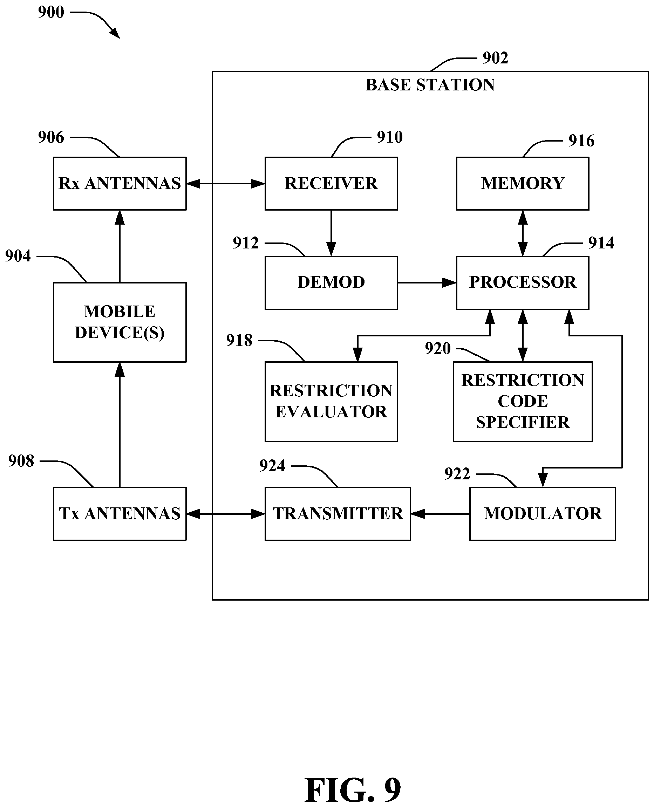

**Fig. 9** is an illustration of a system 900 that facilitates specifying restricted association identifier in wireless communication connection establishment requests. The system 900 comprises a base station 902 *(e.g.,* access point, femtocell, ...) with a receiver 910 that receives signal(s) from one or more mobile devices 904 through a plurality of receive antennas 906, and a transmitter 924 that transmits to the one or more mobile devices 904 through a transmit antenna 908. Receiver 910 can receive information from receive antennas 906 and is operatively associated with a demodulator 912 that demodulates received information. Demodulated symbols are analyzed by a processor 914 that can be similar to the processor described above with regard to Fig. 8, and which is coupled to a memory 916 that stores information related to estimating a signal *(e.g.,* pilot) strength and/or interference strength, data to be transmitted to or received from mobile device(s) 904 (or a disparate base station (not shown)), and/or any other suitable information related to performing the various actions and functions set forth herein. Processor 914 is further coupled to a restriction evaluator 918 that can determine one or more restrictions related to access by the mobile device(s) 904 and a restriction code specifier 920 that can determine a restriction code based on the determined restrictions.

According to an example, the base station 902 can receive a connection request from one or more of the mobile device(s) 904. The restriction evaluator 918 can determine one or more restrictions related to mobile device(s) 904 connecting to the base station 902. The base station 902 can have restricted association, for example as described, where certain mobile device(s) are allowed or denied access to the base station 902. In this regard, the restriction evaluator 918 can determine such denial, for example. The restriction code specifier 920 can generate a restriction code related to the determined denial. Subsequently, the restriction code can be transmitted to the mobile device(s) 904 to indicate a reason for the denial. This allows the mobile device(s) 904 to take further action in response to the restriction code, as described herein. According to an example, the restriction evaluator 918 can determine denial and/or restriction codes by querying a database or similar data store (not shown). The query can be general and/or specifically related to the mobile device(s) 904, for example. Furthermore, although depicted as being separate from the processor 914, it is to be appreciated that the restriction evaluator 918, restriction code specifier 920, demodulator 912, and/or modulator 922 can be part of the processor 914 or multiple processors (not shown).

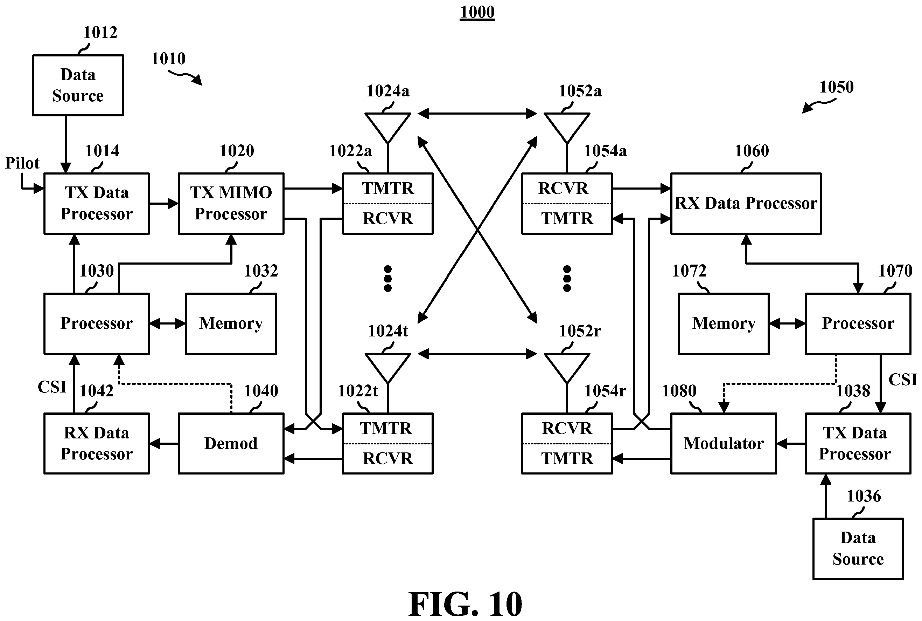

**Fig. 10** shows an example wireless communication system 1000. The wireless communication system 1000 depicts one base station 1010 and one mobile device 1050 for sake of brevity. However, it is to be appreciated that system 1000 can include more than one base station and/or more than one mobile device, wherein additional base stations and/or mobile devices can be substantially similar or different from example base station 1010 and mobile device 1050 described below. In addition, it is to be appreciated that base station 1010 and/or mobile device 1050 can employ the systems **(****Figs. 1-4** and **8-9)** and/or methods **(****Figs. 5-7****)** described herein to facilitate wireless communication there between.

At base station 1010, traffic data for a number of data streams is provided from a data source 1012 to a transmit (TX) data processor 1014. According to an example, each data stream can be transmitted over a respective antenna. TX data processor 1014 formats, codes, and interleaves the traffic data stream based on a particular coding scheme selected for that data stream to provide coded data.

The coded data for each data stream can be multiplexed with pilot data using orthogonal frequency division multiplexing (OFDM) techniques. Additionally or alternatively, the pilot symbols can be frequency division multiplexed (FDM), time division multiplexed (TDM), or code division multiplexed (CDM). The pilot data is typically a known data pattern that is processed in a known manner and can be used at mobile device 1050 to estimate channel response. The multiplexed pilot and coded data for each data stream can be modulated (*e.g*., symbol mapped) based on a particular modulation scheme (*e.g*., binary phase-shift keying (BPSK), quadrature phase-shift keying (QPSK), M-phase-shift keying (M-PSK), M-quadrature amplitude modulation (M-QAM), *etc*.) selected for that data stream to provide modulation symbols. The data rate, coding, and modulation for each data stream can be determined by instructions performed or provided by processor 1030.

The modulation symbols for the data streams can be provided to a TX MIMO processor 1020, which can further process the modulation symbols (*e.g*., for OFDM). TX MIMO processor 1020 then provides *N_{T}* modulation symbol streams to *N_{T}* transmitters (TMTR) 1022a through 1022t. In various embodiments, TX MIMO processor 1020 applies beamforming weights to the symbols of the data streams and to the antenna from which the symbol is being transmitted.

Each transmitter 1022 receives and processes a respective symbol stream to provide one or more analog signals, and further conditions (*e.g*., amplifies, filters, and upconverts) the analog signals to provide a modulated signal suitable for transmission over the MIMO channel. Further, *N_{T}* modulated signals from transmitters 1022a through 1022t are transmitted from *N_{T}* antennas 1024a through 1024t, respectively.

At mobile device 1050, the transmitted modulated signals are received by *N_{R}* antennas 1052a through 1052r and the received signal from each antenna 1052 is provided to a respective receiver (RCVR) 1054a through 1054r. Each receiver 1054 conditions (*e.g*., filters, amplifies, and downconverts) a respective signal, digitizes the conditioned signal to provide samples, and further processes the samples to provide a corresponding "received" symbol stream.

An RX data processor 1060 can receive and process the *N_{R}* received symbol streams from *N_{R}* receivers 1054 based on a particular receiver processing technique to provide *N_{T}* "detected" symbol streams. RX data processor 1060 can demodulate, deinterleave, and decode each detected symbol stream to recover the traffic data for the data stream. The processing by RX data processor 1060 is complementary to that performed by TX MIMO processor 1020 and TX data processor 1014 at base station 1010.

A processor 1070 can periodically determine which precoding matrix to utilize as discussed above. Further, processor 1070 can formulate a reverse link message comprising a matrix index portion and a rank value portion.

The reverse link message can comprise various types of information regarding the communication link and/or the received data stream. The reverse link message can be processed by a TX data processor 1038, which also receives traffic data for a number of data streams from a data source 1036, modulated by a modulator 1080, conditioned by transmitters 1054a through 1054r, and transmitted back to base station 1010.

At base station 1010, the modulated signals from mobile device 1050 are received by antennas 1024, conditioned by receivers 1022, demodulated by a demodulator 1040, and processed by a RX data processor 1042 to extract the reverse link message transmitted by mobile device 1050. Further, processor 1030 can process the extracted message to determine which precoding matrix to use for determining the beamforming weights.

Processors 1030 and 1070 can direct (*e.g*., control, coordinate, manage, *etc.)* operation at base station 1010 and mobile device 1050, respectively. Respective processors 1030 and 1070 can be associated with memory 1032 and 1072 that store program codes and data. Processors 1030 and 1070 can also perform computations to derive frequency and impulse response estimates for the uplink and downlink, respectively.

It is to be understood that the embodiments described herein can be implemented in hardware, software, firmware, middleware, microcode, or any combination thereof. For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

When the embodiments are implemented in software, firmware, middleware or microcode, program code or code segments, they can be stored in a machine-readable medium, such as a storage component. A code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, *etc.* can be passed, forwarded, or transmitted using any suitable means including memory sharing, message passing, token passing, network transmission, *etc.*

For a software implementation, the techniques described herein can be implemented with modules (*e.g*., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

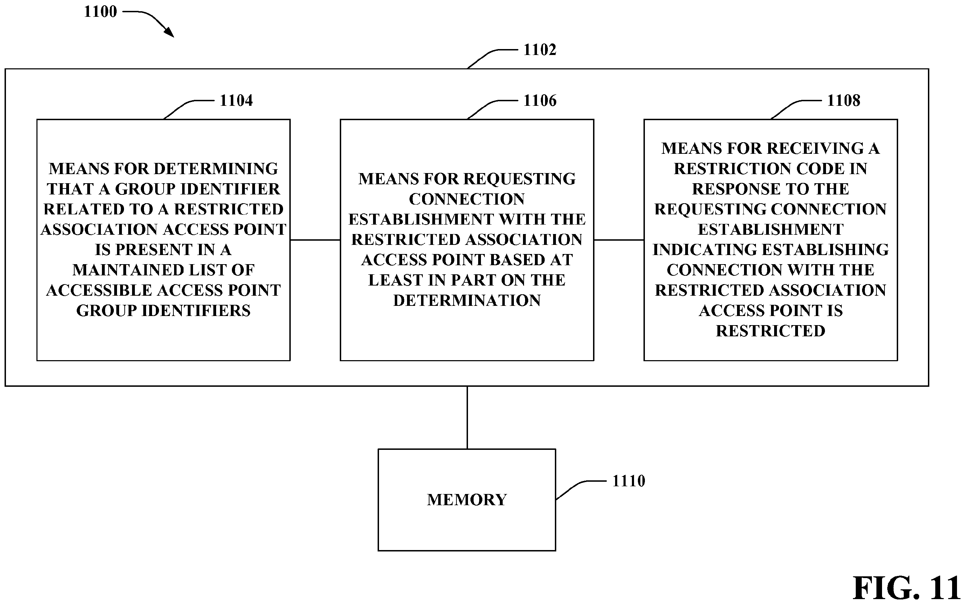

Turning to **Fig. 11****,** illustrated is a system 1100 that receives restriction codes in attempting connection with one or more restricted association access points. System 1100 can reside within a base station, femtocell, mobile device, *etc.,* for instance. As depicted, system 1100 includes functional blocks that can represent functions implemented by a processor, software, or combination thereof (*e.g.,* firmware). System 1100 includes a logical grouping 1102 of electrical components that act in conjunction. Logical grouping 1102 can include means for determining that a group identifier related to a restricted association access point is present in a maintained list of accessible access point group identifiers 1104. As described, a list of accessible access points and/or groups can be maintained to conserve resources in establishing communications. Where access points and/or related groups are not present in the list, connection establishment requests can be avoided as the access points or those in related groups can be unsuitable. Moreover, logical grouping 1102 can include means for requesting connection establishment with the restricted association access point based at least in part on the determination 1106. Thus, if the identifier or group identifier is in the list, the connection establishment can be requested from the access point. Further, logical grouping 1102 can include means for receiving a restriction code in response to the requesting connection establishment indicating establishing connection with the restricted association access point is restricted 1108. Thus, based on the restriction code, in one example, subsequent connection establishment requests can be foregone, as described. Additionally, system 1100 can include a memory 1110 that retains instructions for executing functions associated with electrical components 1104, 1106, and 1108. While shown as being external to memory 1110, it is to be understood that electrical components 1104, 1106, and 1108 can exist within memory 1110.

What has been described above includes examples of one or more embodiments. It is, of course, not possible to describe every conceivable combination of components or methodologies for purposes of describing the aforementioned embodiments, but one of ordinary skill in the art may recognize that many further combinations and permutations of various embodiments are possible. Accordingly, the described embodiments are intended to embrace all such alterations, modifications and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

In one or more aspects, the functions described may be implemented in hardware, software, firmware, or any combination thereof. If implemented in software, the functions may be stored or transmitted as one or more instructions or code on a computer-readable medium. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and blu-ray disc where disks usually reproduce data magnetically, while discs usually reproduce data optically with lasers. Combinations of the above should also be included within the scope of computer-readable media.

## Claims

1. A method (600) for connection establishment in a wireless communication network, comprising:
determining (604) at a mobile station whether a restricted association access point is present in a maintained list of accessible femto access points;
requesting (606), by the mobile station, connection establishment with the restricted association access point based at least in part on the determination;
receiving (608) a rejection at the mobile station in response to the requesting connection establishment, the rejection comprising a restriction code that indicates a reason for the rejection, wherein the restriction code is indicative of a temporary or more permanent restriction; and
deleting the restricted association access point from the maintained list of accessible femto access points, if the restriction code indicates a more permanent restriction.

2. The method (600) of claim 1, wherein requesting (606) connection establishment is performed over the air and the rejection is received over the air from the restricted association access point.

3. The method (600) of claim 1, wherein requesting (606) connection establishment is performed over a backhaul connection with the restricted association access point and the rejection is received over the backhaul connection.

4. The method (600) of claim 1, further comprising participating in cell reselection from a disparate access point where requesting connection establishment is performed during the cell reselection.

5. The method (600) of claim 1, wherein the restricted association access point is restricted from providing signaling, data access, registration, and/or service based at least in part on the restriction code.

6. The method (600) of claim 1, wherein the requesting connection establishment comprises including authentication information in the request.

7. A computer readable medium embodying machine executable instructions for causing at least one computer to perform a method according to one of the claims 1 to 6 when executed on the computer.

8. A wireless communications apparatus (1100) that is arranged to establish a connection with one or more access points in wireless communications, comprising:
means for determining (1104) that a restricted association access point is present in a maintained list of accessible femto access points;
means for requesting (1106) connection establishment with the restricted association access point based at least in part on the determination;
means for receiving (1108) a rejection comprising a restriction code in response to the requesting connection establishment indicating a reason for the rejection, wherein the restriction code is indicative of a temporary or more permanent restriction; and
means for deleting the restricted association access point from the maintained list of accessible femto access points, if the restriction code indicates a more permanent restriction.

9. The apparatus (1100) according to claim 8, further comprising:
an access list controller that is arranged to maintain the list of accessible femto access points and to determine the restricted association access point is present in the list;
a connection requestor that is arranged to request connection establishment with the restricted association access point based at least in part on the determination by the access list controller; and
a restriction code receiver that is arranged to receive the restriction code in response to the requesting connection establishment indicating the restricted association access point is unsuitable for establishing connection,
wherein the access list controller is arranged to delete the restricted association access point from the maintained list of accessible femto access points based at least in part on the restriction code.

10. The apparatus (1100) of claim 9, wherein the connection requestor is arranged to request connection establishment over the air and the restriction code receiver is arranged to receive the restriction code over the air from the restricted association access point.

11. The apparatus (1100) of claim 9, wherein the connection requestor is arranged to request connection establishment over a backhaul connection with the restricted association access point and the restriction code receiver is arranged to receive the restriction code over the backhaul connection.

12. The apparatus of claim 9, further comprising a cell reselector that is arranged to participate in cell reselection from a disparate access point where the connection requestor requests the connection establishment during the cell reselection.

13. The apparatus (1100) of claim 9, wherein the restriction code receiver is arranged to determine that the restricted association access point is restricted from providing signaling, data access, registration, and/or service to the apparatus based at least in part on the restriction code.

14. The apparatus (1100) of claim 9, wherein the connection requestor is arranged to include authentication information in the request for connection establishment.

15. The wireless communications apparatus (1100) of claim 8, comprising at least one processor and a memory coupled to the at least one processor for performing the function of the means.

## Patentansprüche

1. Verfahren (600) zum Verbindungsaufbau in einem drahtlosen Kommunikationsnetzwerk, aufweisend:
Bestimmen (604) an einer Mobilstation, ob ein beschränkter Assoziierungszugangspunkt vorhanden ist in einer instandgehaltenen Liste von zugänglichen Femtozugangspunkten;
Anfragen (606) durch die Mobilstation, von Verbindungsaufbau mit dem beschränkten Assoziierungszugangspunkt basierend zumindest teilweise auf der Bestimmung;
Empfangen (608) einer Ablehnung an der Mobilstation als Antwort auf das Anfragen des Verbindungsaufbaus, wobei die Ablehnung einen Beschränkungscode aufweist, der einen Grund für die Ablehnung kennzeichnet, wobei der Beschränkungscode eine temporäre oder permanentere Beschränkung anzeigt; und
Löschen des beschränkten Assoziierungszugangspunkts von der instandgehaltenen Liste von zugänglichen Femtozugangspunkten, wenn der Beschränkungscode eine permanentere Beschränkung anzeigt.

2. Verfahren (600) nach Anspruch 1, wobei Anfragen (606) des Verbindungsaufbaus über die Luft erfolgt und die Ablehnung über die Luft empfangen wird von dem beschränkten Assoziierungszugangspunkt.

3. Verfahren (600) nach Anspruch 1, wobei Anfragen (606) des Verbindungsaufbaus über eine Backhaul-Verbindung mit dem beschränkten Assoziierungszugangspunkt erfolgt und die Ablehnung über die Backhaul-Verbindung empfangen wird.

4. Verfahren (600) nach Anspruch 1, weiter aufweisend, Teilnehmen an Zellenwiederauswahl von einem disparaten Zugangspunkt, wobei Anfragen des Verbindungsaufbaus ausgeführt wird während der Zellenwiederauswahl.

5. Verfahren (600) nach Anspruch 1, wobei der beschränkte Assoziierungszugangspunkt beschränkt ist was die Bereitstellung von Signalisierung, Datenzugriff, Registrierung, und/oder Service, der zumindest teilweise auf dem Beschränkungscode basiert, betrifft.

6. Verfahren (600) nach Anspruch 1, wobei das Anfragen des Verbindungsaufbaus aufweist, Beinhalten einer Authentifizierungsinformation in der Anfrage.

7. Ein computerlesbares Medium das maschinell-ausführbare Instruktionen enthält zum Veranlassen, dass zumindest ein Computer ein Verfahren gemäß einem der Ansprüche 1-6 ausführt, wenn sie auf einem Computer ausgeführt werden.

8. Drahtloses Kommunikationsgerät (1100), das eingerichtet ist, eine Verbindung mit einem oder mehreren Zugangspunkten in drahtloser Kommunikation aufzubauen, aufweisend:
Mittel zum Bestimmen (1104), dass ein beschränkter
Assoziierungszugangspunkt in einer instandgehaltenen Liste von zugänglichen Femtozugangspunkten vorhanden ist;
Mittel zum Anfragen (1106) von Verbindungsaufbau mit dem beschränkten Assoziierungszugangspunkt, basierend zumindest teilweise auf der Bestimmung;
Mittel zum Empfangen (1108) einer Ablehnung, die einen Beschränkungscode aufweist als Antwort auf das Anfragen der Verbindungseinrichtung, der einen Grund für die Ablehnung anzeigt, wobei der Beschränkungscode eine vorübergehende oder permanentere Beschränkung anzeigt; und
Mittel zum Löschen des beschränkten Assoziierungszugangspunkts von der instandgehaltenen Liste von zugänglichen Femtozugangspunkten, wenn der Beschränkungscode eine permanentere Beschränkung anzeigt.

9. Vorrichtung (1100) nach Anspruch 8, weiter aufweisend:
einen Zugangslisten-Controller, der eingerichtet ist, um die Liste der zugänglichen Femtozugangspunkte instand zu halten und zu bestimmen ob der beschränkte Assoziierungszugangspunkt in der Liste vorhanden ist;
einen Verbindungs-Anfrager, der eingerichtet ist, um Verbindungsaufbau mit dem beschränkten Assoziierungszugangspunkt anzufragen, basierend zumindest teilweise auf der Bestimmung durch den Zugangslisten-Controller; und
ein Beschränkungscodeempfänger, der eingerichtet ist, um den Beschränkungscode in Reaktion auf das Anfragen des Verbindungsaufbaus zu empfangen, der anzeigt dass der beschränkte Assoziierungszugangspunkt ungeeignet ist zum Verbindungsaufbau,
wobei der Zugangslisten-Controller eingerichtet ist, den eingeschränkten Assoziierungszugangspunkt aus der instandgehaltenen Liste von zugänglichen Femtozugangspunkten zu löschen, basierend zumindest teilweise auf dem Beschränkungscode.

10. Vorrichtung (1100) nach Anspruch 9, wobei der Verbindungs-Anfrager eingerichtet ist um Verbindungsaufbau über die Luft anzufragen und der Beschränkungscodeempfänger eingerichtet ist um den Beschränkungscode über die Luft zu empfangen von dem beschränkten Assoziierungszugangspunkt.

11. Vorrichtung (1100) nach Anspruch 9, wobei der Verbindungs-Anfrager eingerichtet ist um Verbindungsaufbau über eine Backhaul-Verbindung mit dem beschränkten Assoziierungszugangspunkt, anzufragen und der Beschränkungscodeempfänger eingerichtet ist um den Beschränkungscode über die Backhaul-Verbindung zu empfangen.

12. Vorrichtung nach Anspruch 9, weiter aufweisend einen Zellenwiederauswähler, der eingerichtet ist um teilzunehmen an Zellenwiederauswahl von einem disparaten Zugangspunkt wo der Verbindungs-Anfrager den Verbindungsaufbau anfragt während der Zellenwiederauswahl.

13. Vorrichtung (1100) nach Anspruch 9, wobei der Beschränkungscodeempfänger eingerichtet ist um zu bestimmen, dass der beschränkte Assoziierungszugangspunkt beschränkt ist, was die Bereitstellung von Signalisierung, Datenzugriff, Registrierung, und/oder Service für die Vorrichtung, der zumindest teilweise auf dem Beschränkungscode basiert, betrifft.

14. Vorrichtung (1100) nach Anspruch 9 wobei der Verbindungs-Anfrager eingerichtet ist um Authentifizierungsinformationen in der Anfrage zum Verbindungsaufbau zu beinhalten.

15. Drahtlose Kommunikationsvorrichtung (1100) nach Anspruch 8, aufweisend zumindest einen Prozessor und einen Speicher, der an den zumindest einen Prozessor gekoppelt ist um die Funktion der Mittel auszuführen.

## Revendications

1. Procédé (600) d'établissement de connexion dans un réseau de communication sans fil, comprenant :
la détermination (604) au niveau d'une station mobile si un point d'accès à association restreinte est présent dans une liste entretenue de points d'accès femto accessibles ;
la demande (606), par la station mobile, d'un établissement de connexion avec le point d'accès à association restreinte sur la base au moins en partie de la détermination ;
la réception (608) d'un rejet au niveau de la station mobile en réponse à la demande d'établissement de connexion, le rejet comprenant un code de restriction qui indique une raison pour le rejet, dans lequel le code de restriction est indicatif d'une restriction temporaire ou plutôt permanente ; et
la suppression du point d'accès à association restreinte de la liste entretenue de points d'accès femto accessibles, si le code de restriction indique une restriction plutôt permanente.

2. Procédé (600) selon la revendication 1, dans lequel la demande (606) d'établissement de connexion est effectuée par voie hertzienne et le rejet est reçu par voie hertzienne à partir du point d'accès à association restreinte.

3. Procédé (600) selon la revendication 1, dans lequel la demande (606) d'établissement de connexion est effectuée sur une connexion *backhaul* avec le point d'accès à association restreinte et le rejet est reçu sur la connexion *backhaul.*

4. Procédé (600) selon la revendication 1, comprenant en outre la participation à une resélection de cellule à partir d'un point accès différent où la demande d'établissement de connexion est effectuée durant la resélection de cellule.

5. Procédé (600) selon la revendication 1, dans lequel le point d'accès à association restreinte est limité par rapport à la fourniture d'une signalisation, d'un accès aux données, d'un enregistrement et/ou d'un service sur la base au moins en partie du code de restriction.

6. Procédé (600) selon la revendication 1, dans lequel la demande d'établissement de connexion comprend des informations d'authentification dans la demande.

7. Support lisible par ordinateur incorporant des instructions exécutables par machine pour amener au moins un ordinateur à mettre en oeuvre un procédé selon l'une quelconque des revendications 1 à 6, quand elles sont exécutées sur l'ordinateur.

8. Appareil de communication sans fil (1100) qui est agencé pour établir une connexion avec un ou plusieurs points d'accès dans des communications sans fil, comprenant :
des moyens pour déterminer (1104) qu'un point d'accès à association restreinte est présent dans une liste entretenue de points d'accès femto accessibles ;
des moyens pour demander (1106) un établissement de connexion avec le point d'accès à association restreinte sur la base au moins de la détermination ;
des moyens pour recevoir (1108) un rejet comprenant un code de restriction, en réponse à la demande d'établissement de connexion, indiquant une raison pour le rejet, dans lequel le code de restriction est indicatif d'une restriction temporaire ou plutôt permanente ; et
des moyens pour supprimer le point d'accès à association restreinte de la liste entretenue de points d'accès femto accessibles, si le code de restriction indique une restriction plutôt permanente.

9. Appareil (1100) selon la revendication 8, comprenant en outre :
un contrôleur de liste d'accès qui est agencé pour entretenir la liste de points d'accès femto accessibles et pour déterminer si le point d'accès à association restreinte est présent dans la liste ;
un dispositif de demande de connexion qui est agencé pour demander un établissement de connexion avec le point d'accès à association restreinte sur la base au moins en partie de la détermination par le contrôleur de liste d'accès ; et
un récepteur de code de restriction qui est agencé pour recevoir le code de restriction en réponse à la demande d'établissement de connexion indiquant que le point d'accès à association restreinte est inadapté pour un établissement de connexion,
dans lequel le contrôleur de liste d'accès est agencé pour supprimer le point d'accès à association restreinte de la liste entretenue de points d'accès femto accessibles sur la base au moins en partie du code de restriction.

10. Appareil (1100) selon la revendication 9, dans lequel le dispositif de demande de connexion est agencé pour demander l'établissement de connexion par voie hertzienne et le récepteur de code de restriction est agencé pour recevoir le code de restriction par voie hertzienne à partir du point d'accès à association restreinte.

11. Appareil (1100) selon la revendication 9, dans lequel le dispositif de demande de connexion est agencé pour demander l'établissement de connexion sur une connexion *backhaul* avec le point d'accès à association restreinte et le récepteur de code de restriction est agencé pour recevoir le code de restriction sur la connexion *backhaul.*

12. Appareil selon la revendication 9, comprenant en outre un resélecteur de cellule qui est agencé pour participer à une resélection de cellule à partir d'un point accès différent où le dispositif de demande de connexion demande l'établissement de connexion durant la resélection de cellule.

13. Appareil (1100) selon la revendication 9, dans lequel le récepteur de code de restriction est agencé pour déterminer que le point d'accès à association restreinte est limité par rapport à la fourniture d'une signalisation, d'un accès aux données, d'un enregistrement et/ou d'un service à l'appareil sur la base au moins en partie du code de restriction.

14. Appareil (1100) selon la revendication 9, dans lequel le dispositif de demande de connexion est agencé pour inclure des informations d'authentification dans la demande d'établissement de connexion.

15. Appareil de communication sans fil (1100) selon la revendication 8, comprenant au moins un processeur et une mémoire couplée à l'au moins un processeur pour mettre en oeuvre la fonction des moyens.
